# EUROPEAN PATENT SPECIFICATION

(11) **EP 3 059 515 B1**
(45) Date of publication and mention of the grant of the patent: **06.12.2017**
(21) Application number: 14853743.4
(22) Date of filing: 17.10.2014
(51) Int. Cl.: F24F 11/02, F24F 11/053, F24F 11/00, F24F 3/14, F24F 1/00

(54) **AIR CONDITIONER**
KLIMAANLAGE
CLIMATISEUR

(30) Priority: 17.10.2013 JP 2013216380
(43) Date of publication of application: 24.08.2016
(73) Proprietor: Daikin Industries, Ltd., Osaka-shi, Osaka 530-8323 (JP)
(72) Inventor: NAKATA, Takahiro, Osaka-shi Osaka 530-8323 (JP); UGAI, Kouji, Osaka-shi Osaka 530-8323 (JP); MORI, Takashige, Osaka-shi Osaka 530-8323 (JP)
(74) Representative: Hoffmann Eitle
(86) International application number: PCT/JP2014/077697
(87) International publication number: WO 2015/056780

(56) References cited:
- JP-A- H0 914 725
- JP-A- H09 152 193
- JP-A- 2001 065 953
- JP-A- 2001 263 763
- JP-A- 2003 314 854
- JP-A- 2008 014 605

## Description

### Technical Field

The present invention relates to an air conditioner configured to perform dehumidification operation.

### Background Art

An air conditioner is known, e.g. , from patent document JP H09 152193 A. Here, an air conditioner comprises a refrigerant circuit in which a compressor, an outdoor heat exchanger, an expansion valve, and an indoor heat exchanger are connected to one another. The air conditioner is capable of performing cooling operations and a dehumidification operation, wherein in the dehumidification operation the compressor and an evaporation valve are controlled so that an extend of evaporation region varies depending on a load.

Further, therehas been a known air conditioner including a main heat exchanger and an auxiliary heat exchanger disposed rearward of the main heat exchanger, the air conditioner being configured so that refrigerant evaporates only in the auxiliary heat exchanger to limit the place where dehumidification is performed. This enables dehumidification under a low load (i.e. , when the number of revolutions of a compressor is small), for example, when the difference between room temperature and a set temperature is sufficiently small and therefore the required cooling capacity is small. In this air conditioner, the evaporation region is limited within the auxiliary heat exchanger, and a temperature sensor is disposed downstream of the evaporation region, to control the superheat degree constant.

### Citation List

### Patent Literature

Patent Literature 1: JP H09 152 193 A
Patent Literature 2: Japanese Unexamined Patent Publication No. 14727/1997 (Tokukaihei 09-14727)

### Summary of Invention

### Technical Problem

However, with the above control to maintain the superheat degree constant, the evaporation temperature has to be lowered when the load is relatively high. If the evaporation temperature is too low, the heat exchanger may freeze. In addition, such a decrease of the evaporation temperature leads to a reduction in efficiency of the refrigeration cycle. When the load becomes extremely low, to the contrary, the evaporation temperature has to be increased; however, air cannot be dehumidified if the evaporation temperature is too high.

The inventors of the present invention addressed the above technical problem, and found that it is possible to dehumidify air without significantly changing the evaporation temperature with an increase or decrease of a load by arranging the air conditioner such that: a portion of an indoor heat exchanger close to a liquid inlet functions as the evaporation region in dehumidification operation; and a compressor and an expansion valve are controlled so that the extent of the evaporation region changes depending on the load. In this arrangement, however, if the indoor fan is controlled in the dehumidification operation similarly to that in the cooling operation, in which the entirety of the indoor heat exchanger functions as the evaporation region, there is a possibility that too large an air volume of the indoor unit leads to too small an extent of the evaporation region of the indoor heat exchanger to dehumidify the air.

In view of the above, an object of the present invention is to provide an air conditioner capable of reliably performing dehumidification in dehumidification operation.

### Solution to Problem

According to the first aspect of the invention, an air conditioner includes a refrigerant circuit in which a compressor, an outdoor heat exchanger, an expansion valve, and an indoor heat exchanger are connected to one another, and the air conditioner has the features of claim 1

In this air conditioner, the compressor and the expansion valve are controlled so that the extent of the evaporation region of the indoor heat exchanger varies depending on the load in the dehumidification operation. However, if the air volume of the indoor unit is too large, there is a possibility that the extent of the evaporation region decreases excessively and the air cannot be dehumidified. In order to properly dehumidify the air in the dehumidification operation, it is necessary to prevent such an excessive decrease of the extent of the evaporation region. Thus, in the present invention, the air volume of the indoor unit (the maximum number of revolutions of the indoor fan) in the dehumidification operation is controlled to be smaller than the air volume of the indoor unit (the maximum number of revolutions of the indoor fan) in the cooling operation, to prevent the excessive decrease of the extent of the evaporation region of the indoor heat exchanger in the dehumidification operation. Accordingly, in the present invention, the excessive decrease of the extent of the evaporation region due to too large an air volume of the indoor unit does not occur in the dehumidification operation, and therefore the air is properly dehumidified in the dehumidification operation.

According to the second aspect of the invention, the air conditioner of the first aspect further includes a room temperature detecting means adapted to detect a room temperature, and the control unit of the air conditioner is configured to change in the dehumidification operation, the number of revolutions of the indoor fan depending on the room temperature detected by the room temperature detecting means.

In this air conditioner, the number of revolutions of the indoor fan in the dehumidification operation is changed depending on the room temperature, and therefore the number of revolutions of the indoor fan is settable so that dehumidification can be performed without a decrease in the room temperature.

According to the third aspect of the invention, the air conditioner of the first or second aspect further includes a room humidity detecting means adapted to detectroom humidity, and the control unit of the air conditioner is configured to change in the dehumidification operation, the number of revolutions of the indoor fan depending on the room humidity detected by the room humidity detecting means.

In this air conditioner, the number of revolutions of the indoor fan in the dehumidification operation is changed depending on the room humidity, and therefore the number of revolutions of the indoor fan is correctable for efficient dehumidification.

According to the fourth aspect of the invention, the control unit of the air conditioner of the third aspect is configured, in the dehumidification operation, the number of revolutions of the indoor fan to decrease when the frequency of the compressor is lower than a predetermined value.

It is considered that as the frequency of the compressor decreases, the amount of supplied refrigerant decreases, and therefore the dehumidification capacity decreases. In this air conditioner, the number of revolutions of the indoor fan is changed to decrease as the frequency of the compressor decreases, and therefore a reduction of the dehumidification capacity is restrained, leading to efficient dehumidification.

According to the fifth aspect of the invention, the control unit of the air conditioner of the third or fourth aspect is configured to change, in the dehumidification operation, the number of revolutions of the indoor fan to increase when the frequency of the compressor is equal to or higher than a predetermined value.

In this air conditioner, even in the configuration where the frequency of the compressor is restricted, for example, on account of superheat control of the outdoor unit, the number of revolutions of the indoor fan is changeable to increase. With this, the evaporation region of the indoor heat exchanger is changeable within a wider range in the dehumidification operation, and therefore it is possible to sufficiently follow a variation in load.

### Advantageous Effects of Invention

As described hereinabove, the present invention brings about the following advantageous effects.

According to the first aspect, the air volume of the indoor unit in the dehumidification operation is smaller than that in the cooling operation, and this prevents an excessive decrease of the evaporation region of the indoor heat exchanger, which makes dehumidification unfeasible.

According to the second aspect, the number of revolutions of the indoor fan is controlled so that dehumidification is performed without a decrease in the room temperature.

According to the third aspect, the number of revolutions of the indoor fan is corrected depending on the room humidity, and this enables efficient dehumidification.

It is considered that as the frequency of the compressor decreases, the dehumidification capacity decreases. According to the fourth aspect, the number of revolutions of the indoor fan is changed to decrease as the frequency of the compressor decreases, and therefore a reduction of the dehumidification capacity is restrained, leading to efficient dehumidification.

According to the fifth aspect, even in the configuration where the range of the frequency of the compressor is limited due to superheat control of the outdoor unit, for example, the number of revolutions of the indoor fan is changeable to increase. With this, the evaporation region of the indoor heat exchanger is changeable within a wider range in the dehumidification operation, and therefore it is possible to sufficiently follow a variation in load.

### Brief Description of Drawings

[FIG. 1] FIG. 1 is a circuit diagram showing a refrigerant circuit of an air conditioner of an embodiment of the present invention.

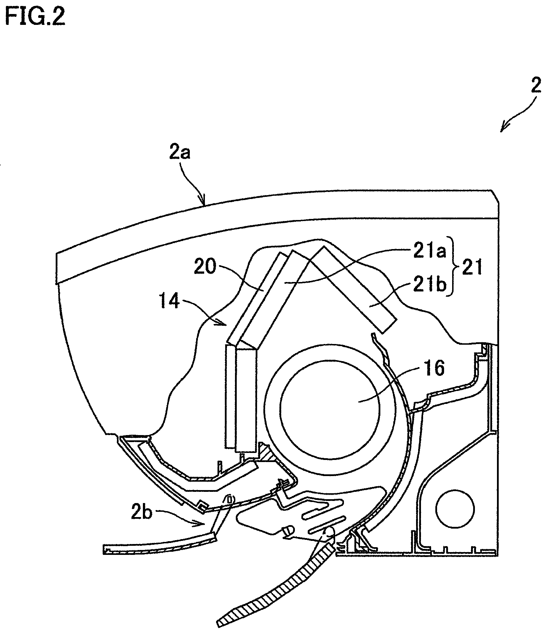

[FIG. 2] FIG. 2 is a schematic cross section of an indoor unit of the air conditioner of the embodiment of the present invention.
[FIG. 3] FIG. 3 is a diagram illustrating the structure of an indoor heat exchanger.
[FIG. 4] FIG. 4 is a diagram illustrating a control unit of the air conditioner of the embodiment of the present invention.
[FIG. 5] FIG. 5 is a graph showing, by way of example, how the flow rate changes as the opening degree of an expansion valve is changed.
[FIG. 6] FIG. 6 is an explanatory diagram for fan-taps of an indoor fan.
[FIG. 7] FIG. 7 is a flowchart illustrating control in an operation in a dehumidification operation mode.
[FIG. 8] FIG. 8 is a flowchart illustrating control of the number of revolutions of the indoor fan in a predetermined dehumidification operation mode.
[FIG. 9] FIG. 9 is an explanatory diagram for room temperature zones in the predetermined dehumidification operation mode.
[FIG. 10] FIG. 10 is an explanatory diagram for humidity zones in the predetermined dehumidification operation mode.
[FIG. 11] FIG. 11 is an explanatory diagram for a correction amount of the number of revolutions of the indoor fan.

### Description of Embodiments

The following describes an air conditioner 1 of an embodiment of the present invention.

### <Overall Structure of Air Conditioner 1>

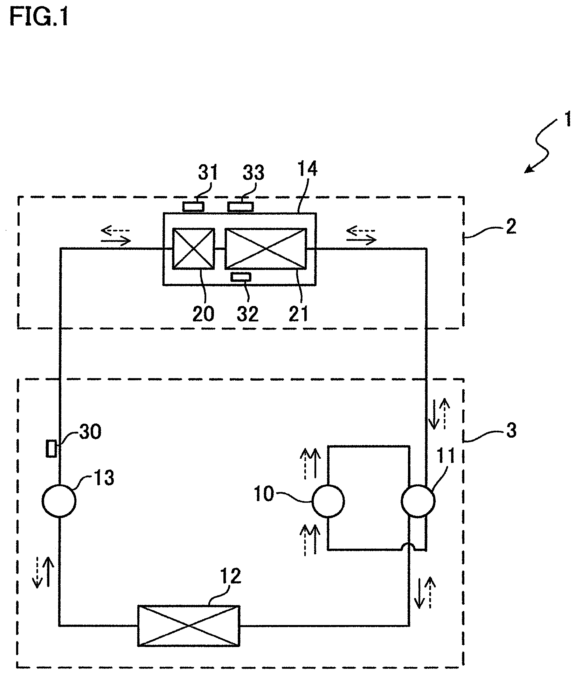

As shown in FIG. 1, the air conditioner 1 of this embodiment includes: an indoor unit 2 installed inside a room; and an outdoor unit 3 installed outside the room. The air conditioner 1 further includes a refrigerant circuit in which a compressor 10, a four-way valve 11, an outdoor heat exchanger 12, an expansion valve 13, and an indoor heat exchanger 14 are connected to one another. In the refrigerant circuit, the outdoor heat exchanger 12 is connected to a discharge port of the compressor 10 via the four-way valve 11, and the expansion valve 13 is connected to the outdoor heat exchanger 12. Further, one end of the indoor heat exchanger 14 is connected to the expansion valve 13, and the other end of the indoor heat exchanger 14 is connected to an intake port of the compressor 10 via the four-way valve 11. The indoor heat exchanger 14 includes an auxiliary heat exchanger 20 and a main heat exchanger 21.

The air conditioner 1 is capable of operating in a cooling operation mode, in a predetermined dehumidification operation mode, and in a heating operation mode. Using a remote controller, various operations are possible: starting the operation in a mode selected from these operation modes; changing the operation mode; stopping the operation; and the like. Further, using the remote controller, it is possible to adjust room temperature setting, and to change the air volume of the indoor unit 2 by changing the number of revolutions of an indoor fan.

As indicated with solid arrows in the figure, in the cooling operation mode and in the predetermined dehumidification operation mode, there are respectively formed a cooling cycle and a dehumidification cycle, in each of which: refrigerant discharged from the compressor 10 flows, from the four-way valve 11, through the outdoor heat exchanger 12, the expansion valve 13, and the auxiliary heat exchanger 20, to the main heat exchanger 21 in order; and the refrigerant having passed through the main heat exchanger 21 returns back to the compressor 10 via the four-way valve 11. That is, the outdoor heat exchanger 12 functions as a condenser, and the indoor heat exchanger 14 (the auxiliary heat exchanger 20 and the main heat exchanger 21) functions as an evaporator.

Meanwhile, in the heating operation mode, the state of the four-way valve 11 is switched, to form a heating cycle in which: the refrigerant discharged from the compressor 10 flows, from the four-way valve 11, through the main heat exchanger 21, the auxiliary heat exchanger 20, and the expansion valve 13, to the outdoor heat exchanger 12 in order; and the refrigerant having passed through the outdoor heat exchanger 12 returns back to the compressor 10 via the four-way valve 11, as indicated with broken arrows in the figure. That is, the indoor heat exchanger 14 (the auxiliary heat exchanger 20 and the main heat exchanger 21) functions as the condenser, and the outdoor heat exchanger 12 functions as the evaporator.

The indoor unit 2 has, on its upper surface, an air inlet 2a through which room air is taken in. The indoor unit 2 further has, on a lower portion of its front surface, an air outlet 2b through which air for air conditioning comes out. Inside the indoor unit 2, an airflow path is formed from the air inlet 2a to the air outlet 2b. In the airflow path, the indoor heat exchanger 14 and a cross-flow indoor fan 16 are disposed. Thus, as the indoor fan 16 rotates, room air is taken into the indoor unit 1 through the air inlet 2a. In a front portion of the indoor unit 2, air taken in through the air inlet 2a flows through the auxiliary heat exchanger 20 and the main heat exchanger 21 toward the indoor fan 16. Meanwhile, in a rear portion of the indoor unit 2, air taken in through the air inlet 2a flows through the main heat exchanger 21 toward the indoor fan 16.

As described above, the indoor heat exchanger 14 includes: the auxiliary heat exchanger 20; and the main heat exchanger 21 located downstream of the auxiliary heat exchanger 20 in an operation in the cooling operation mode or in the predetermined dehumidification operation mode. The main heat exchanger 21 includes: a front heat exchanger 21a disposed closer to a front surface of the indoor unit 2; and a rear heat exchanger 21b disposed closer to a rear surface of the indoor unit 2. The heat exchangers 21a and 21b are arranged in a shape of a counter-V around the indoor fan 16. Further, the auxiliary heat exchanger 20 is disposed forward of the front heat exchanger 21a. Each of the auxiliary heat exchanger 20 and the main heat exchanger 21 (the front heat exchanger 21a and the rear heat exchanger 21b) includes heat exchanger pipes and a plurality of fins.

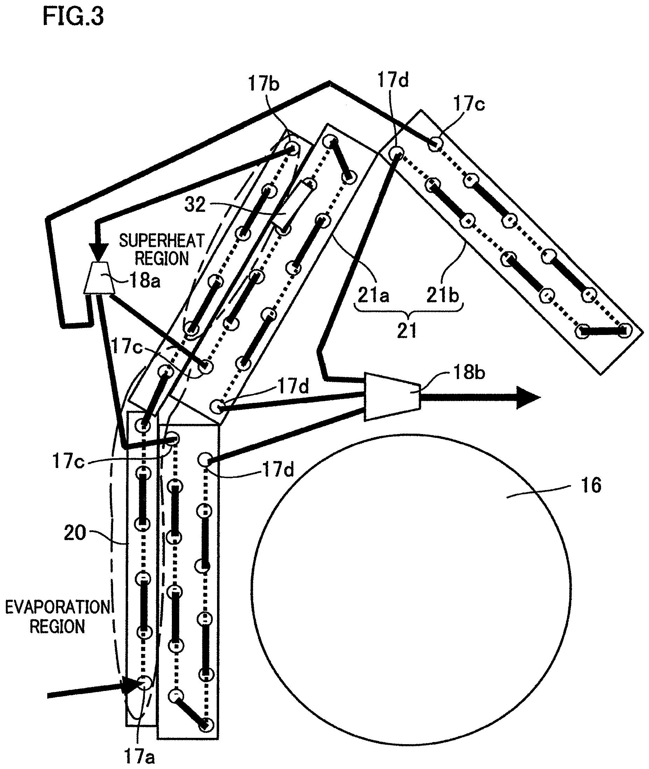

In the cooling operation mode and in the predetermined dehumidification operation mode, liquid refrigerant is supplied through a liquid inlet 17a provided in the vicinity of a lower end portion of the auxiliary heat exchanger 20, and the thus supplied liquid refrigerant flows toward an upper end of the auxiliary heat exchanger 20, as shown in FIG. 3. Then, the refrigerant is discharged through an outlet 17b provided in the vicinity of the upper end of the auxiliary heat exchanger 20, and then flows to a branching section 18a. The refrigerant is divided at the branching section 18a into branches, which are respectively supplied, via three inlets 17c of the main heat exchanger 21, to a lower portion and an upper portion of the front heat exchanger 21a and to the rear heat exchanger 21b. Then, the branches of refrigerant are discharged through outlets 17d, and merge together at a merging section 18b. In the heating operation mode, the refrigerant flows in a reverse direction of the above direction.

When the air conditioner 1 operates in the predetermined dehumidification operation mode, the liquid refrigerant supplied through the liquid inlet 17a of the auxiliary heat exchanger 20 all evaporates midway in the auxiliary heat exchanger 20, i.e. , before reaching the outlet of the auxiliary heat exchanger 20. Therefore, only a part of the auxiliary heat exchanger 20 which is in the vicinity of the liquid inlet 17a is an evaporation region where the liquid refrigerant evaporates. Accordingly, in the operation in the predetermined dehumidification operation mode, only the upstream part of the auxiliary heat exchanger 20 functions as the evaporation region, while a downstream part of the auxiliary heat exchanger 20, which is downstream of the evaporation region, and the main heat exchanger 21 function as a superheat region, in the indoor heat exchanger 14.

Further, the refrigerant having flowed through the superheat region in the vicinity of the upper end of the auxiliary heat exchanger 20 flows through the lower portion of the front heat exchanger 21a disposed leeward from a lower portion of the auxiliary heat exchanger 20. Therefore, among the air taken in through the air inlet 2a, air having been cooled in the evaporation region of the auxiliary heat exchanger 20 is heated by the front heat exchanger 21a, and then blown out from the air outlet 2b. Meanwhile, among the air taken in through the air inlet 2a, air having flowed through the superheat region of the auxiliary heat exchanger 20 and through the front heat exchanger 21a, and air having flowed through the rear heat exchanger 21b are blown out from the air outlet 2b at a temperature substantially the same as the room temperature.

In the air conditioner 1, an evaporation temperature sensor 30 is attached to the outdoor unit 3, as shown in FIG. 1. The evaporation temperature sensor 30 is configured to detect evaporation temperature and is disposed downstream of the expansion valve 13 in the refrigerant circuit. Further, a room temperature sensor 31, an indoor heat exchanger temperature sensor 32, and a room humidity sensor 33 are attached to the indoor unit 2. The room temperature sensor 31 is configured to detect the room temperature (the temperature of the intake air taken through the air inlet 2a of the indoor unit 2) . The indoor heat exchanger temperature sensor 32 is configured to detect whether evaporation of the liquid refrigerant is completed in the auxiliary heat exchanger 20. The room humidity sensor is configured to detect room humidity (the humidity of the intake air taken through the air inlet 2a of the indoor unit 2).

As shown in FIG. 3, the indoor heat exchanger temperature sensor 32 is disposed in the vicinity of the upper end of the auxiliary heat exchanger 20 and leeward from the auxiliary heat exchanger 20. In the superheat region in the vicinity of the upper end of the auxiliary heat exchanger 20, the air taken in through the air inlet 2a is hardly cooled. For this reason, when the temperature detected by the indoor heat exchanger temperature sensor 32 is substantially equal to the room temperature detected by the room temperature sensor 31, it is indicated that evaporation is completed midway in the auxiliary heat exchanger 20, and that the part in the vicinity of the upper end of the auxiliary heat exchanger 20 is the superheat region. Furthermore, the indoor heat exchanger temperature sensor 32 is provided to a heat-transfer tube in a middle portion of the indoor heat exchanger 14. Thus, in the vicinity of the middle portion of the indoor heat exchanger 14, the condensation temperature is detected in the heating operation, and the evaporation temperature is detected in the cooling operation.

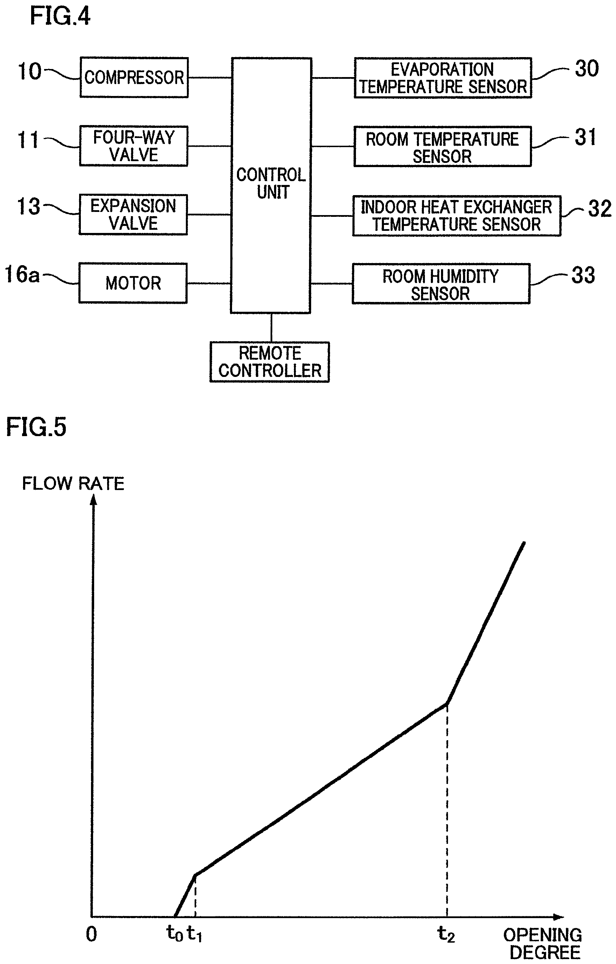

As shown in FIG. 4, the control unit of the air conditioner 1 is connected with: the compressor 10; the four-way valve 11; the expansion valve 13; a motor 16a for driving the indoor fan 16; the evaporation temperature sensor 30; the room temperature sensor 31; the indoor heat exchanger temperature sensor 32; and the room humidity sensor 33. Therefore, the control unit controls the operation of the air conditioner 1 based on: a command from the remote controller (for the start of the operation, for room temperature setting, or the like); the evaporation temperature detected by the evaporation temperature sensor 30; the room temperature detected by the room temperature sensor 31 (the temperature of the intake air) ; the heat exchanger middle temperature detected by the indoor heat exchanger temperature sensor 32; and the room humidity detected by the room humidity sensor 33 (the humidity of the intake air).

Further, in the air conditioner 1, the auxiliary heat exchanger 20 includes the evaporation region where the liquid refrigerant evaporates and the superheat region downstream of the evaporation region in the predetermined dehumidification operation mode. The compressor 10 and the expansion valve 13 are controlled so that the extent of the evaporation region varies depending on a load. Here, "the extent varies depending on a load" means that the extent varies depending on the quantity of heat supplied to the evaporation region, and the quantity of heat is determined, for example, by the room temperature (the temperature of the intake air) and an air volume to the room. Further, the load corresponds to a required dehumidification capacity (required cooling capacity) , and the load is determined taking into account, for example, the difference between the room temperature and a set temperature.

The compressor 10 is controlled based on the difference between the room temperature and the set temperature. When the difference between the room temperature and the set temperature is large, the load is high, and therefore the compressor 10 is controlled so that its frequency increases. When the difference between the room temperature and the set temperature is small, the load is low, and therefore the compressor 10 is controlled so that its frequency decreases.

The expansion valve 13 is controlled based on the evaporation temperature detected by the evaporation temperature sensor 30. While the frequency of the compressor 10 is controlled as described above, the expansion valve 13 is controlled so that the evaporation temperature falls within a predetermined temperature range (10 to 14 degrees Celsius) close to a target evaporation temperature (12 degrees Celsius) . It is preferable that the predetermined evaporation temperature range is constant, irrespective of the frequency of the compressor 10. However, the predetermined range may be slightly changed with the change of the frequency as long as the predetermined range is substantially constant.

Thus, the compressor 10 and the expansion valve 13 are controlled depending on the load in the predetermined dehumidification operation mode, and thereby changing the extent of the evaporation region of the auxiliary heat exchanger 20, to cause the evaporation temperature to fall within the predetermined temperature range.

In the air conditioner 1, each of the auxiliary heat exchanger 20 and the front heat exchanger 21a has 12 rows of the heat-transfer tubes. When the number of rows of the tubes functioning as the evaporation region in the auxiliary heat exchanger 20 in the predetermined dehumidification operation mode is not less than a half of the total number of rows of the tubes of the front heat exchanger 21a, it is possible to sufficiently increase the extent of the evaporation region of the auxiliary heat exchanger, and therefore a variation in the load is sufficiently reflected. This structure is effective especially under a high load.

FIG. 5 is a graph showing how the flow rate changes when the opening degree of the expansion valve 13 is changed. The opening degree of the expansion valve 13 continuously changes with the number of driving pulses input to the expansion valve 13. As the opening degree decreases, the flow rate of the refrigerant flowing through the expansion valve 13 decreases. The expansion valve 13 is fully closed when the opening degree is t0. In the range of the opening degrees t0 to t1, the flow rate increases at a first gradient as the opening degree increases. In the range of the opening degrees t1 to t2, the flow rate increases at a second gradient as the opening degree increases. Note that the first gradient is larger than the second gradient.

In the air conditioner 1 of this embodiment, control for preventing an excessive increase of the frequency of the compressor 10 is made to prevent the whole of the auxiliary heat exchanger 20 from functioning as the evaporation region, by checking whether the part of the auxiliary heat exchanger 20 which is closer to the upper end of the auxiliary heat exchanger 20 is the superheat region based on the temperature detected by the indoor heat exchanger temperature sensor 32. This control is hereinafter referred to as "superheat control" because this control is made to ensure that the part of the auxiliary heat exchanger 20 functions as the superheat region.

Further, in the air conditioner 1, the number of revolutions of the indoor fan 16 (the number of revolutions per minute) is controlled based on the room temperature (the temperature of the intake air) and based on the room humidity (the humidity of the intake air), in the predetermined dehumidification operation mode.

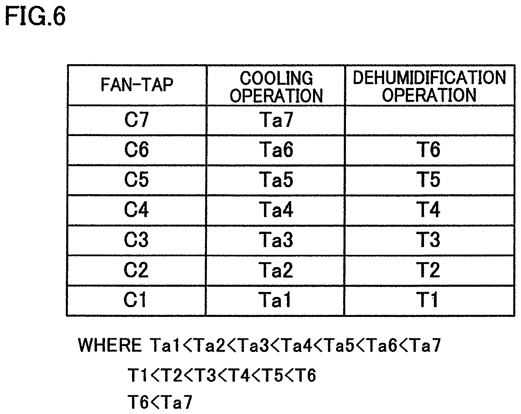

As shown in FIG. 6, in the air conditioner 1 of this embodiment, control of the fan-tap of the indoor fan 16 of the indoor unit is made so that one of fan-taps C1 to C7 is selected in the cooling operation mode, while one of the fan-taps C1 to C6 is selected in the predetermined dehumidification operation mode. In the cooling operation mode, the numbers of revolutions Ta1 to Ta7 of the indoor fan 16 are set so as to respectively correspond to the fan-taps C1 to C7. In the predetermined dehumidification operation mode, the numbers of revolutions T1 to T6 of the indoor fan 16 are set so as to respectively correspond to the fan-taps C1 to C6. In the cooling operation mode, out of the numbers of revolutions Ta1 to Ta7 of the indoor fan 16, Ta1 is the smallest, and Ta7 is the largest. In the predetermined dehumidification operation mode, out of the numbers of revolutions T1 to T6 of the indoor fan 16, T1 is the smallest, and T6 is the largest. In the air conditioner 1 of this embodiment, the number of revolutions T6 corresponding to the maximum air volume in the predetermined dehumidification operation mode is smaller than the number of revolutions Ta7 corresponding to the maximum air volume in the cooling operation mode, and the maximum air volume in the predetermined dehumidification operation mode is smaller than the maximum air volume in the cooling operation mode.

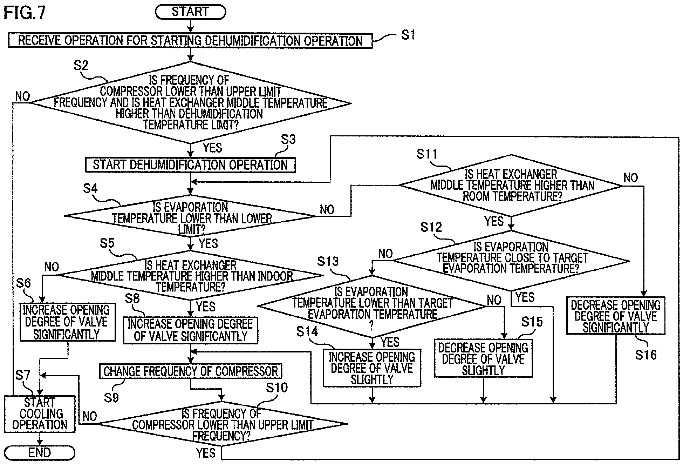

With reference to FIG. 7, description will be given for the control in an operation in the predetermined dehumidification operation mode in the air conditioner 1.

First, when the operation for starting the dehumidification operation is performed using the remote controller (step S1), it is determined whether the frequency of the compressor is lower than an upper limit frequency and whether the heat exchanger middle temperature is higher than a dehumidification temperature limit, and thereby determining whether dehumidification in the cooling operation is unfeasible because the load is low (step S2) . In step S2, whether dehumidification in the cooling operation is unfeasible because the load is low is determined, first by determining whether the frequency of the compressor is lower than the upper limit frequency in the dehumidification operation mode. In this regard, dehumidification could be possible even with a frequency of the compressor lower than the upper limit frequency, provided that the evaporation temperature is low. For this reason, if the evaporation temperature is lower than the dehumidification temperature limit, it is not determined that dehumidification in the cooling operation is unfeasible because the load is low. Accordingly, in step S2, it is determined that dehumidification is unfeasible in the cooling operation when the load is low and the evaporation temperature is higher than the dehumidification temperature limit.

Then, when it is determined that the frequency of the compressor is lower than the upper limit frequency and the heat exchanger middle temperature is higher than the dehumidification temperature limit (step S2: YES), dehumidification in the cooling operation is unfeasible because the load is low. Therefore, the opening degree of the valve is rapidly decreased, and then the dehumidification operation is started (step S3). Then, the dehumidification operation is started in which: the liquid refrigerant supplied through the liquid inlet 17a of the auxiliary heat exchanger 20 all evaporates midway in the auxiliary heat exchanger 20; and therefore only a part of the auxiliary heat exchanger 20 which is in the vicinity of the liquid inlet 17a functions as the evaporation region.

After the dehumidification operation is started, it is determined whether the evaporation temperature detected by the evaporation temperature sensor 30 is lower than a lower limit, to determine whether the evaporation temperature is too low. (step S4) . When the evaporation temperature is lower than the lower limit (lower limit for preventing the closure of the expansion valve 13), it is considered that the expansion valve 13 is almost closed. Therefore, in step S4, it is determined whether the expansion valve 13 is almost closed, to determine whether the opening degree of the valve needs to be increased.

Then, when it is determined that the evaporation temperature is lower than the lower limit (the expansion valve 13 is almost closed) (step S4: YES), it is determined whether the heat exchanger middle temperature (the temperature of the air in the vicinity of the upper end of the auxiliary heat exchanger 20 and leeward from the auxiliary heat exchanger 20) is higher than the room temperature, thereby to determine whether evaporation is completed in the auxiliary heat exchanger 20 (step S5) . When the portion of the auxiliary heat exchanger 20 which is in the vicinity of the upper end of the auxiliary heat exchanger 20 is the superheat region, the air taken in through the air inlet 2a is hardly cooled in the vicinity of the upper end of the auxiliary heat exchanger 20, and therefore, the heat exchanger middle temperature detected by the indoor heat exchanger temperature sensor 32 is close to or higher than the room temperature detected by the room temperature sensor 31. Accordingly, in step S5, when the heat exchanger middle temperature is equal to or higher than a temperature obtained by subtracting a correction amount from the room temperature, it is determined that the temperature of the air in the vicinity of the upper end of the auxiliary heat exchanger 20 and leeward from the auxiliary heat exchanger 20 is higher than the room temperature, and it is determined that the portion in the vicinity of the upper end of the auxiliary heat exchanger 20 is the superheat region, and hence evaporation is completed in the auxiliary heat exchanger 20.

When the heat exchanger middle temperature (the temperature of the air in the vicinity of the upper end of the auxiliary heat exchanger 20 and leeward from the auxiliary heat exchanger 20) is lower than the room temperature (step S5: NO), the opening degree of the valve is rapidly increased (step S6) though evaporation is not completed within the auxiliary heat exchanger 20. Then, the cooling operation is started in the state where the liquid refrigerant supplied through the liquid inlet 17a of the auxiliary heat exchanger 20 flows into the main heat exchanger 21 (step S7).

On the other hand, when the heat exchanger middle temperature (the temperature of the air in the vicinity of the upper end of the auxiliary heat exchanger 20 and leeward from the auxiliary heat exchanger 20) is higher than the room temperature (step S5: YES), evaporation is completed within the auxiliary heat exchanger 20 and the auxiliary heat exchanger 20 has the evaporation region and the superheat region. In this state, the opening degree of the valve is significantly increased (step S8) . Thereafter, the frequency of the compressor is changed so that the room temperature approaches the set temperature (step S9). Then, it is determined whether the frequency of the compressor is lower than the upper limit frequency (step S10) . When the frequency of the compressor is equal to or higher than the upper limit frequency (step S10: NO), dehumidification is possible in the cooling operation, and therefore the cooling operation is started (step S7) . When the frequency of the compressor is lower than the upper limit frequency (step S10: YES), the routine proceeds to step S4 while keeping the dehumidification operation.

When, in step S2, it is determined that the frequency of the compressor is equal to or higher than the upper limit frequency, or that the heat exchanger middle temperature is equal to or lower than the dehumidification temperature limit (step S2: NO), dehumidification is possible in the cooling operation, and therefore the cooling operation is started (step S7) .

When, in step S4, the evaporation temperature detected by the evaporation temperature sensor 30 is equal to or higher than the lower limit (step S4: NO), it is determined whether the heat exchanger middle temperature (the temperature of the air in the vicinity of the upper end of the auxiliary heat exchanger 20 and leeward from the auxiliary heat exchanger 20) is higher than the room temperature, thereby to determine whether evaporation is completed within the auxiliary heat exchanger 20 (step S11).

When the heat exchanger middle temperature (the temperature of the air in the vicinity of the upper end of the auxiliary heat exchanger 20 and leeward from the auxiliary heat exchanger 20) is higher than the room temperature (step S11: YES), evaporation is completed within the auxiliary heat exchanger 20, and the auxiliary heat exchanger 20 has the evaporation region and the superheat region. Then, it is determined whether the evaporation temperature falls within the predetermined temperature range close to the target evaporation temperature (step S12). Thus, in step S12, it is determined whether the opening degree of the valve needs to be changed so that the evaporation temperature detected by the evaporation temperature sensor 30 falls within the predetermined temperature range close to the target evaporation temperature.

When, in step S12, the evaporation temperature falls within the predetermined temperature range close to the target evaporation temperature (step S12: YES), there is no need to change the opening degree of the valve, and therefore the routine proceeds to step S9.

On the other hand, when the evaporation temperature does not fall within the predetermined temperature range close to the target evaporation temperature (step S12: NO), it is determined whether the evaporation temperature is lower than the target evaporation temperature (step S13). When the evaporation temperature is lower than the target evaporation temperature (step S13: YES), the opening degree of the valve is slightly increased so that the evaporation temperature becomes closer to the target evaporation temperature (step S14) . When the evaporation temperature is higher than the target evaporation temperature (step S13: NO), the opening degree of the valve is slightly decreased so that the evaporation temperature becomes closer to the target evaporation temperature (step S15) . Then, the routine proceeds to step S9.

When, in step S11, the heat exchanger middle temperature (the temperature of the air in the vicinity of the upper end of the auxiliary heat exchanger 20 and leeward from the auxiliary heat exchanger 20) is equal to or lower than the room temperature (step S11: NO), evaporation is not completed within the auxiliary heat exchanger 20, and therefore the opening degree of the valve is significantly closed (step S16). Then, the routine proceeds to step S9.

Thus, in the air conditioner 1, control is made so that the extent of the evaporation region of the auxiliary heat exchanger 20 varies in the predetermined dehumidification operation mode. For example, when the load increases in the predetermined dehumidification operation mode in the situation where the extent of the evaporation region of the auxiliary heat exchanger 20 is of a predetermined size, the frequency of the compressor 10 is increased and the opening degree of the expansion valve 13 is changed so as to increase. As a result, the extent of the evaporation region of the auxiliary heat exchanger 20 becomes larger than that of the predetermined size, and this increases the volume of the air actually passing through the evaporation region when the volume of the air taken into the indoor unit 2 is constant.

Meanwhile, when the load becomes lower in the predetermined dehumidification operation mode in the situation where the extent of the evaporation region of the auxiliary heat exchanger 20 is of the predetermined size, the frequency of the compressor 10 is decreased and the opening degree of the expansion valve 13 is changed so as to decrease. Therefore, the extent of the evaporation region of the auxiliary heat exchanger 20 becomes smaller than that of the predetermined size, and this decreases the volume of the air actually passing through the evaporation region when the volume of the air taken into the indoor unit 2 is constant.

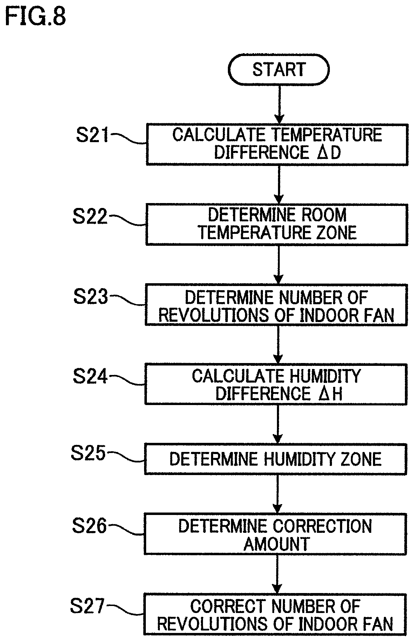

With reference to FIG. 8 to FIG. 11, description will be given for the control of the number of revolutions of the indoor fan of the air conditioner 1 in the predetermined dehumidification operation mode.

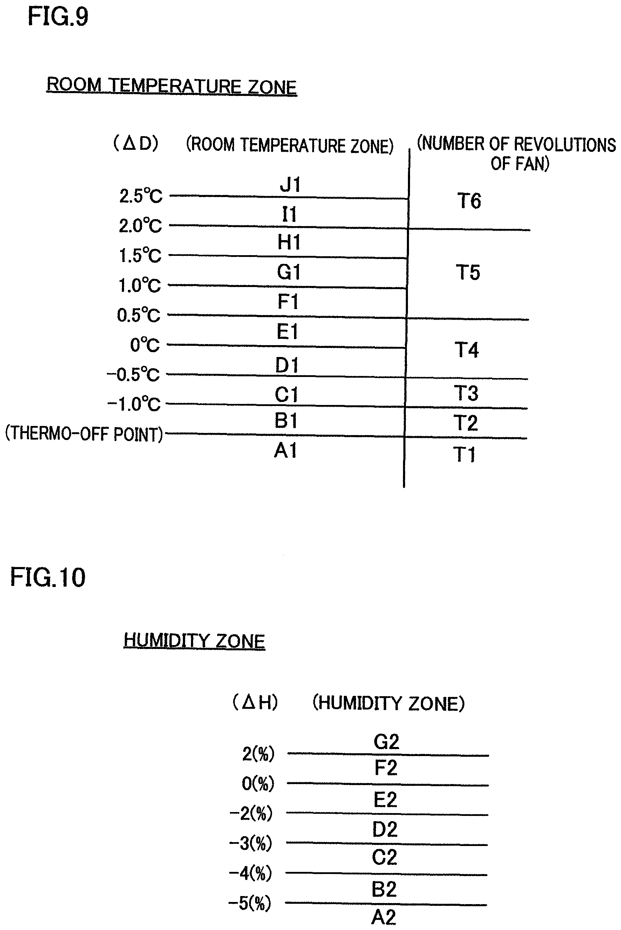

First, a temperature difference ΔD between the room temperature and the target room temperature (ΔD = room temperature - target room temperature) is calculated (step S21) . The target room temperature is equal to the room temperature at the start of the operation in the predetermined dehumidification operation mode. After the temperature difference ΔD is calculated, a room temperature zone corresponding to the thus calculated amount is selected from room temperature zones A1 to J1 (step S22). As shown in FIG. 9, the room temperature zones A1 to J1 are set to respectively correspond to different ranges of the temperature difference ΔD. Based on the thus determined room temperature zone, the number of revolutions of the indoor fan 16 is determined (step S23) . As shown in FIG. 8, any one of the numbers of revolutions T1 to T6 of the indoor fan 16 is associated with each of the room temperature zones A1 to J1.

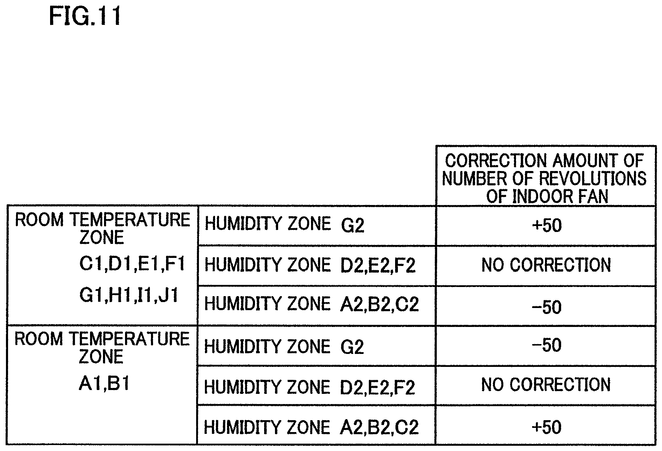

Meanwhile, a humidity difference ΔH between the room humidity and a target room humidity (ΔH = room humidity - target room humidity) is calculated (step S24). The target room humidity is the humidity level set by a user of the air conditioner 1, as a target room humidity in the predetermined dehumidification operation mode. For example, in the air conditioner 1, the target room humidity in the predetermined dehumidification operation mode is set to any of 50%, 55 %, and 60%, by a user through a remote controller. After the humidity difference ΔH is calculated, a humidity zone corresponding to the thus calculated amount is selected from humidity zones A2 to G2 (step S25) . As shown in FIG. 10, the humidity zones A2 to G2 are set to respectively correspond to the different ranges of the humidity difference ΔH. Based on the thus determined room temperature zone and the humidity zone, the correction amount for the number of revolutions of the indoor fan 16 is determined (step S26). As shown in FIG. 11, the way of determining the correction amount is different depending on whether the determined room temperature zone is one of the zones A1 to B1, or one of the zones C1 to J1. When the determined room temperature zone is one of the zones A1 to Bl, the temperature difference ΔD between the room temperature and the target room temperature is small, and therefore the load is low. For this reason, the compressor 10 is controlled to have a lower frequency. When the determined room temperature zone is one of the zones C1 to J1, the temperature difference ΔD between the room temperature and the target room temperature is large, and therefore the load is lower than that in the case of the zone A1 or B1. For this reason, the compressor 10 is controlled to have a higher frequency. In each of the cases where the determined room temperature zone is one of the zones A1 to B1 and where the determined room temperature zone is one of the zones C1 to J1, correction amounts are set so as to be associated with the humidity zones A2 to G2.

For example, when the determined room temperature zone is one of the zones A1 to B1, the correction amount for the humidity zone G2 is set to -50 (correction amount of the number of revolutions per minute). This is based on the fact that: the higher the frequency of the compressor 10 is, the higher dehumidification capacity is; and the smaller the number of revolutions of the indoor fan 16 is, the higher the dehumidification capacity is. When the determined room temperature zone is one of the zones A1 to B1, the compressor 10 is controlled to have a lower frequency. With this, dehumidification capacity for the humidity zone G2 corresponding to a large humidity difference ΔH between the room humidity and the target room humidity cannot be provided. Because the dehumidification capacity cannot be increased by increasing the frequency of the compressor 10 in this case, the dehumidification capacity is increased by decreasing the number of revolutions of the indoor fan 16. The number of revolutions of the indoor fan 16 determined based on the room temperature zone is thus corrected based on the humidity zone. Thus, it is possible to increase the dehumidification capacity even when the frequency of the compressor 10 is low.

When the determined room temperature zone is one of the zones C1 to J1, the correction amount for the humidity zone G2 is set to +50 (correction amount of the number of revolutions per minute) . This is because the superheat control to prevent the entirety of the auxiliary heat exchanger 20 from functioning as the evaporation region is applied in the air conditioner 1 of this embodiment. Accordingly, when the determined room temperature zone is one of the zones C1 to J1, the compressor 10 is controlled to have a higher frequency. However, the superheat control limits the increase of the frequency of the compressor 10, and therefore dehumidification capacity for the humidity zone G2 corresponding to the large humidity difference ΔH between the room humidity and the target room humidity cannot be provided. Thus, in this case, the number of revolutions of the indoor fan 16 is increased so that the increase of the frequency of the compressor 10 is not limited by the superheat control, and thereby, the frequency of the compressor 10 is increased to enhance the dehumidification capacity. The number of revolutions of the indoor fan 16 determined based on the room temperature zone is thus corrected based on the humidity zone. This makes it is possible to increase , the dehumidification capacity even when the increase of the frequency of the compressor 10 is limited by the superheat control.

Based on the thus determined correction amount, the number of revolutions of the indoor fan determined based on the room temperature zone is corrected (step S27).

### <Characteristics of Air Conditioner of This Embodiment>

In the air conditioner 1 of this embodiment, the air volume of the indoor unit 2 (the maximum number of revolutions of the indoor fan 16) in the dehumidification operation is controlled to be smaller than the air volume of the indoor unit 2 (the maximum number of revolutions of the indoor fan 16) in the cooling operation, to prevent an excessive decrease of the extent of the evaporation region of the auxiliary heat exchanger 20 in the dehumidification operation. Accordingly, in the present invention, the excessive decrease of the extent of the evaporation region due to too large an air volume of the indoor unit 2 does not occur in the dehumidification operation, and therefore the air is properly dehumidified in the dehumidification operation.

Further, in the air conditioner 1 of this embodiment, the number of revolutions of the indoor fan 16 in the dehumidification operation is changed depending on the room temperature, and with the thus set number of revolutions of the indoor fan 16, dehumidification is performed without a decrease in the room temperature.

Furthermore, in the air conditioner 1 of this embodiment, the number of revolutions of the indoor fan 16 in the dehumidification operation is changed depending on the room humidity, and therefore the number of revolutions of the indoor fan 16 is correctable for efficient dehumidification.

It is considered that as the frequency of the compressor 10 decreases, the amount of supplied refrigerant decreases, and therefore the dehumidification capacity decreases. In the air conditioner 1 of this embodiment, the number of revolutions of the indoor fan 16 is changed to decrease as the frequency of the compressor decreases, and therefore a reduction of the dehumidification capacity is restrained, leading to efficient dehumidification.

Further, in the air conditioner 1 of this embodiment, even in the configuration where the range of the frequency of the compressor is limited due to superheat control of the outdoor unit 3, for example, the number of revolutions of the indoor fan 16 is changeable to increase. With this, the evaporation region of the auxiliary heat exchanger 20 is changeable within a wider range in the dehumidification operation, and therefore it is possible to sufficiently follow a variation in load.

In addition, in the air conditioner 1 of this embodiment, the compressor 10 and the expansion valve 13 are controlled so that the evaporation temperature falls within the predetermined temperature range. Therefore, the extent of the evaporation region of the auxiliary heat exchanger 20 is properly changed depending on the load, and the evaporation temperature is adjusted so as to fall within the range in which dehumidification is possible. This makes it possible to continue dehumidification under a wide range of loads, without excessively decreasing the evaporation temperature, which worsens the COP (coefficient of performance), in order to complete evaporation within the auxiliary heat exchanger 20 when the load is high. Further, there is no need to extremely decrease the evaporation temperature, and therefore freeze is prevented, which eliminates the necessity of defrost operation. Moreover, dehumidification is possible even when the volume of the air is increased, and therefore, the room air is dehumidified while uniformly cooling the entire room even under a low load, to remove uncomfortable feeling of humid and hot air.

While the embodiment of the present invention has been described based on the figures, the scope of the invention is not limited to the above-described embodiment. The scope of the present invention is defined by the appended claims rather than the foregoing description of the embodiment, and various changes and modifications can be made herein without departing from the scope of the invention.

For example, while the above-described embodiment deals with the case where the number of revolutions of the indoor fan 16 is determined based on the temperature difference ΔD between the room temperature and the target room temperature and then the number of revolutions is corrected based on the humidity difference ΔH between the room humidity and the target room humidity, the way of determining the number of revolutions of the indoor fan 16 may be changed. Specifically, for example, after the number of revolutions of the indoor fan 16 is determined based on the temperature difference ΔD between the room temperature and the target room temperature, no correction may be made based on the humidity difference ΔH between the room humidity and the target room humidity. Further, if the number of revolutions of the indoor fan 16 is corrected based on the humidity difference ΔH between the room humidity and the target room humidity, the way of correcting the number of revolutions may be changed. Furthermore, the number of revolutions of the indoor fan 16 may be determined based on the humidity difference ΔH between the room humidity and the target room humidity, without using the temperature difference ΔD between the room temperature and the target room temperature.

While the above-described embodiment deals with the case where the number of revolutions of the indoor fan 16 is determined with the use of the room temperature zones A1 to J1 set to respectively correspond to the different ranges of the temperature difference ΔD, the number of revolutions of the indoor fan 16 may be determined without using the room temperature zones A1 to J1.

Further, while the above-described embodiment deals with the case where the correction amount of the number of revolutions of the indoor fan 16 is determined with the use of the humidity zones A2 to G2 set to respectively correspond to the different ranges of the humidity difference ΔH, the correction amount of the number of revolutions of the indoor fan 16 may be determined without using the humidity zones A2 to G2.

Further, in the above-described embodiment, the auxiliary heat exchanger and the main heat exchanger may be formed into a single unit. In this case, the indoor heat exchanger is formed as a single unit, and a first portion of the indoor heat exchanger corresponding to the auxiliary heat exchanger is provided on the most windward side of the indoor heat exchanger, and a second portion of the indoor heat exchanger corresponding to the main heat exchanger is provided leeward from the first portion.

Further, the above-described embodiment deals with the air conditioner capable of operating in the cooling operation mode, in the predetermined dehumidification operation mode, and in the heating operation mode. However, the present invention may be applied to an air conditioner capable of conducting dehumidification operation in a dehumidification operation mode different from the predetermined dehumidification operation mode, in addition to the dehumidification operation in the predetermined dehumidification operation mode.

### Industrial Applicability

The present invention ensures that dehumidification is performed, under a low load, even when the load varies.

### Reference Signs List

- 1:: air conditioner
- 2:: indoor unit
- 3:: outdoor unit
- 10:: compressor
- 12:: outdoor heat exchanger
- 13:: expansion valve
- 14:: indoor heat exchanger
- 16:: indoor fan
- 20:: auxiliary heat exchanger
- 21:: main heat exchanger
- 31:: room temperature sensor
- 33:: room humidity sensor

## Claims

1. An air conditioner (1) comprising a refrigerant circuit in which a compressor (10) an outdoor heat exchanger (2), an expansion valve (13), and an indoor heat exchanger (14) are connected to one another, the air conditioner being capable of performing: cooling operation in which the entirety of the indoor heat exchanger (14) functions as an evaporation region; and dehumidification operation in which a portion of the indoor heat exchanger (14) close to its liquid inlet (17a) functions as the evaporation region, wherein: the air conditioner further comprises an indoor fan (16) opposed to the indoor heat exchanger (14);
wherein
the indoor heat exchanger (14) includes an auxiliary heat exchanger (20) and a main heat exchanger (21), **characterized in that** the main heat exchanger (21) includes a front heat exchanger (21a) disposed closer to a front surface of an indoor unit (2) and a rear heat exchanger (21b) disposed closer to a rear surface of the indoor unit(2), the auxiliary heat exchanger being disposed forward of the front heat exchanger (21a), liquid refrigerant being supplied to the auxiliary heat exchanger (20) and the main heat exchanger (21) in the dehumidification operation:
*a* control unit of the air conditioner is configured to control, in the dehumidification operation, the compressor (10) and the expansion valve (13) so that an extent of the evaporation region varies, in the auxiliary heat exchanger (20), depending on a load; and the control unit of the air conditioner is configured to control the maximum number of revolutions of the indoor fan (16) in the dehumidification operation such that it is smaller than the maximum number of revolutions of the indoor fan (16) in the cooling operation.

2. The air conditioner according to claim 1, further comprising a room temperature detecting means (31) adapted to detect a room temperature, wherein in the dehumidification operation, the control unit of the air conditioner is configured to change the number of revolutions of the indoor fan (16) depending on the room temperature detected by the room temperature detecting means (31).

3. The air conditioner according to claim 1 or 2, further comprising a room humidity detecting means (33) adapted to detecting room humidity, wherein in the dehumidification operation, the control unit of the air conditioner is configured to change the number of revolutions of the indoor fan (16) depending on the room humidity detected by the room humidity detecting means (33).

4. The air conditioner according to claim 3, wherein in the dehumidification operation, the control unit of the air conditioner is configured to change the number of revolutions of the indoor fan (16) to decrease when the frequency of the compressor (10) is lower than a predetermined value.

5. The air conditioner according to claim 3 or 4, wherein in the dehumidification operation, the control unit of the air conditioner is configured to change the number of revolutions of the indoor fan (16) to increase when the frequency of the compressor (10) is equal to or higher than a predetermined value.

## Patentansprüche

1. Klimaanlage (1), umfassend einen Kältemittelkreislauf, in dem ein Kompressor (10), ein Außenraum-Wärmetauscher (2), ein Expansionsventil (13) und ein Innenraum-Wärmetauscher (14) miteinander verbunden sind, wobei die Klimaanlage in der Lage ist, Folgendes durchzuführen: einen Kühlvorgang, bei dem die Gesamtheit des Innenraum-Wärmetauschers (14) als Verdampfungsregion fungiert; und einen Entfeuchtungsvorgang, bei dem ein Abschnitt des Innenraum-Wärmetauschers (14) nahe ihrem Flüssigkeitseinlass (17a) als die Verdampfungsregion fungiert, wobei: die Klimaanlage weiter ein dem Innenraum-Wärmetauscher (14) entgegengesetztes Innenraum-Gebläse (16) umfasst;
wobei
der Innenraum-Wärmetauscher (14) einen Hilfswärmetauscher (20) und einen Hauptwärmetauscher (21) aufweist, **dadurch gekennzeichnet, dass** der Hauptwärmetauscher (21) einen vorderen Wärmetauscher (21a), der näher an einer vorderen Oberfläche einer Inneneinheit (2) angeordnet ist, und einen hinteren Wärmetauscher (21b), der näher an einer hinteren Oberfläche einer Innenraumeinheit (2) angeordnet ist, aufweist, wobei der Hilfswärmetauscher vor dem vorderen Wärmetauscher (21a) angeordnet ist, wobei in dem Entfeuchtungsvorgang dem Hilfswärmetauscher (20) und dem Hauptwärmetauscher (21) flüssiges Kältemittel zugeführt wird:
eine Steuereinheit der Klimaanlage konfiguriert ist, den Kompressor (10) und das Expansionsventil (13) in dem Entfeuchtungsvorgang so zu steuern, dass ein Ausmaß der Verdampfungsregion im Hilfswärmetauscher (20) in Abhängigkeit von einer Last variiert; und die Steuereinheit der Klimaanlage konfiguriert ist, die maximale Drehzahl des Innenraum-Gebläses (16) im Entfeuchtungsvorgang so zu steuern, dass diese kleiner ist als die maximale Drehzahl des Innenraum-Gebläses (16) im Kühlvorgang.

2. Klimaanlage nach Anspruch 1, die weiter ein Raumtemperaturerfassungsmittel (31) umfasst, das zum Erfassen einer Raumtemperatur angepasst ist, wobei
die Steuereinheit der Klimaanlage in dem Entfeuchtungsvorgang konfiguriert ist, die Drehzahl des Innenraum-Gebläses (16) in Abhängigkeit von der durch das Raumtemperaturerfassungsmittel (31) erfassten Raumtemperatur zu ändern.

3. Klimaanlage nach Anspruch 1 oder 2, die weiter ein Raumfeuchtigkeitserfassungsmittel (33) umfasst, das zum Erfassen der Raumfeuchtigkeit angepasst ist, wobei
die Steuereinheit der Klimaanlage in dem Entfeuchtungsvorgang konfiguriert ist, die Drehzahl des Innenraum-Gebläses (16) in Abhängigkeit von der durch das Raumfeuchtigkeitserfassungsmittel (33) erfassten Raumfeuchtigkeit zu ändern.

4. Klimaanlage nach Anspruch 3, wobei die Steuereinheit der Klimaanlage in dem Entfeuchtungsvorgang konfiguriert ist, die Drehzahl des Innenraum-Gebläses (16) abnehmend zu ändern, wenn die Frequenz des Kompressors (10) niedriger ist als ein vorbestimmter Wert.

5. Klimaanlage nach Anspruch 3 oder 4, wobei die Steuereinheit der Klimaanlage in dem Entfeuchtungsvorgang konfiguriert ist, die Drehzahl des Innenraum-Gebläses (16) zunehmend zu ändern, wenn die Frequenz des Kompressors (10) gleich wie oder höher als ein vorbestimmter Wert ist.

## Revendications

1. Climatiseur (1) comprenant un circuit de réfrigérant dans lequel un compresseur (10), un échangeur de chaleur extérieur (2), une soupape de détente (13) et un échangeur de chaleur intérieur (14) sont raccordés les uns aux autres, le climatiseur étant apte à réaliser : une opération de refroidissement dans laquelle l'intégralité de l'échangeur de chaleur intérieur (14) fonctionne comme une région d'évaporation ; et une opération de déshumidification dans laquelle une partie de l'échangeur de chaleur intérieur (14) proche de son entrée de liquide (17a) fonctionne comme la région d'évaporation, dans lequel :
le climatiseur comprend en outre un ventilateur intérieur (16) opposé à l'échangeur de chaleur intérieur (14) ;
dans lequel
l'échangeur de chaleur intérieur (14) inclut un échangeur de chaleur auxiliaire (20) et un échangeur de chaleur principal (21), **caractérisé en ce que** l'échangeur de chaleur principal (21) inclut un échangeur de chaleur avant (21a) disposé plus près d'une surface avant d'une unité intérieure (2) et un échangeur de chaleur arrière (21b) disposé plus près d'une surface arrière de l'unité intérieure (2), l'échangeur de chaleur auxiliaire étant disposé à l'avant de l'échangeur de chaleur avant (21a), du réfrigérant liquide étant fourni à l'échangeur de chaleur auxiliaire (20) et à l'échangeur de chaleur principal (21) dans l'opération de déshumidification :
une unité de commande du climatiseur est configurée pour commander, dans l'opération de déshumidification, le compresseur (10) et la soupape de détente (13) de sorte qu'une étendue de la région d'évaporation varie, dans l'échangeur de chaleur auxiliaire (20), selon une charge ; et l'unité de commande du climatiseur est configurée pour commander le nombre de révolutions maximum du ventilateur intérieur (16) dans l'opération de déshumidification de sorte qu'il soit plus petit que le nombre de révolutions maximum du ventilateur intérieur (16) dans l'opération de refroidissement.

2. Climatiseur selon la revendication 1, comprenant en outre un moyen de détection de température ambiante (31) adapté pour détecter une température ambiante, dans lequel dans l'opération de déshumidification, l'unité de commande du climatiseur est configurée pour changer le nombre de révolutions du ventilateur intérieur (16) selon la température ambiante détectée par le moyen de détection de température ambiante (31).

3. Climatiseur selon la revendication 1 ou 2, comprenant en outre un moyen de détection d'humidité ambiante (33) adapté pour détecter l'humidité ambiante, dans lequel
dans l'opération de déshumidification, l'unité de commande du climatiseur est configurée pour changer le nombre de révolutions du ventilateur intérieur (16) selon l'humidité ambiante détectée par le moyen de détection d'humidité ambiante (33).

4. Climatiseur selon la revendication 3, dans lequel dans l'opération de déshumidification, l'unité de commande du climatiseur est configurée pour changer le nombre de révolutions du ventilateur intérieur (16) à la baisse lorsque la fréquence du compresseur (10) est inférieure à une valeur prédéterminée.

5. Climatiseur selon la revendication 3 ou 4, dans lequel dans l'opération de déshumidification, l'unité de commande du climatiseur est configurée pour changer le nombre de révolutions du ventilateur intérieur (16) à la hausse lorsque la fréquence du compresseur (10) est égale ou supérieure à une valeur prédéterminée.
